# FASCICULE DE BREVET EUROPEEN

(11) **EP 1 031 221 B1**
(45) Date de publication et mention de la délivrance du brevet: **07.09.2005**
(21) Numéro de dépôt: 98950147.3
(22) Date de dépôt: 15.10.1998
(51) Int. Cl.: H04L 29/06, H04L 12/24, G06F 9/44

(54) **PROCEDE POUR GENERER LES FILTRES DESTINES A EVITER LES RISQUES D'INTRUSION DES RESEAUX INFORMATIQUES INTERCONNECTES**
VERFAHREN ZUM ERZEUGEN VON FILTERN, WELCHE DAS EINBRUCHRISIKO IN VERBUNDENE RECHNERNETZE VERHINDERN
METHOD FOR GENERATING FILTERS DESIGNED TO AVOID RISKS OF BREACH IN INTERCONNECTED COMPUTER NETWORKS

(30) Priorité: 16.10.1997 FR 9713254
(43) Date de publication de la demande: 30.08.2000
(73) Titulaire: Solsoft, 92300 Levallois-Perret (FR)
(72) Inventeur: FOUGERAT, Jérôme, F-75015 Paris (FR)
(74) Mandataire: Vidon, Patrice
(86) Numéro de dépôt international: PCT/FR1998/002218
(87) Numéro de publication internationale: WO 1999/021335

(56) Documents cités:
- EP-A- 0 658 837
- HEYDON A ET AL: "MIRO: VISUAL SPECIFICATION OF SECURITY" IEEE TRANSACTIONS ON SOFTWARE ENGINEERING, vol. 16, no. 10, 1 octobre 1990, pages 1185-1197, XP000162478
- BACHMANN D W ET AL: "THE NETWORK MODELING TOOL: A DESIGN AID FOR LARGE-SCALE CAMPUS NETWORKS" PROCEEDINGS OF THE ANNUAL INTERNATIONAL PHOENIX CONFERENCE ON COMPUTERS AND COMMUNICATIONS, SCOTTSDALE, MAR. 21 - 23, 1990, no. CONF. 9, 21 mars 1990, pages 560-567, XP000144586 INSTITUTE OF ELECTRICAL AND ELECTRONICS ENGINEERS
- BELLOVIN S M ET AL: "NETWORK FIREWALLS" IEEE COMMUNICATIONS MAGAZINE, vol. 32, no. 9, 1 septembre 1994, pages 50-57, XP000476555

## Description

Le domaine de l'invention est celui des réseaux informatiques interconnectés.

Le caractère ouvert des réseaux informatiques selon le protocole Internet offre bien des facilités. Toutefois, il apporte aussi son lot de dangers, risques d'intrusion des réseaux, difficultés pour se protéger. Il existe des matériels et des logiciels permettant d'effectuer un filtrage des paquets utilisant le protocole Internet. Toutefois, la maîtrise de ce filtrage pour l'application de politiques de sécurité exigeantes est difficile et complexe.

L'invention concerne un procédé et un système pour représenter de manière graphique les données de programmation des filtres, utilisant le protocole Internet, destinés à éviter les risques d'intrusion des réseaux informatiques interconnectés.

Les termes qui seront ci-après utilisés pour exposer la solution technique selon l'invention, ont les définitions suivantes :
- On désigne par "réseau" un ou des intervalles fermés (au sens topologique du terme) d'adresses du Protocole Internet
- On désigne par "objets" les éléments constitutifs d'un réseau. Ainsi, sans que cette énumération soit exhaustive, sont des objets au sens de la présente invention : les ordinateurs, les équipements informatiques, les serveurs, les imprimantes, les réseaux (physiques ou logiques), les sous-réseaux (physiques ou logiques), les équipements de filtrage, les pare-feu, les utilisateurs ou groupes d'utilisateurs, les applications informatiques. Un objet est caractérisé par son type et par son nom. Par exemple un routeur filtrant est un type d'objet, de même un ensemble de réseaux est un type d'objet. Un objet possède une ou plusieurs adresses ou un ou plusieurs intervalles fermés d'adresses.
- On désigne par "protocole" une convention précisant les règles et les spécifications techniques à respecter dans le domaine des télécommunications afin d'assurer l'interopérabilité des objets.
- On désigne par "protocole de communication" un protocole, tel que par exemple le protocole Internet, définissant une technique de transfert de données.
- On désigne par "protocole d'application" ou "service" un protocole définissant une technique d'échange de données ou de commandes pour une application définie.
- On désigne par "classe" l'ensemble des adresses ayant les mêmes lois de communication. Une classe peut réunir d'autres classes. Les classes sont des objets au sens de la présente description de l'invention.
- On désigne par " loi de communication " une loi autorisant ou interdisant pour le protocole d'application concerné, la communication entre un couple d'objets, un couple de classes ou un couple mixte (classe, objet)
- On désigne par "domaine de sécurité" un ensemble d'objets interconnectés sur lequel s'applique des lois de communication spécifiques à chaque objet ou générales
- On désigne par "lien" ou "connexion", les connexions physiques (les câbles des réseaux par exemple) reliant les objets entre eux. Un réseau est un ensemble d'objets interconnectés.
- On désigne par "routeur" un équipement permettant l'interconnexion de réseaux disjoints .
- On désigne par "filtre" les moyens techniques permettant de mettre en oeuvre les lois de communication. Par exemple la programmation d'un routeur permet de contrôler la possibilité de communiquer entre deux réseaux disjoints. Par extension on appelle routeur filtrant tout équipement permettant le filtrage du protocole Internet

La demande de brevet EP 0 658 837 (CHECKPOINT SOFTWARE TECHNOLOGIES, LTD) décrit un procédé et un système pour présenter les données de programmation des filtres sur l'écran d'un terminal informatique. Ce procédé et ce système mettent en oeuvre un tableur comportant des lignes et des colonnes. L'utilisateur insère dans les cases de ce tableur des vignettes ou des symboles alphanumériques. Ce système ne permet pas de visualiser des réseaux interconnectés complexes et ne donne pas du domaine de sécurité une représentation immédiatement intelligible. Au delà de quelques dizaines de lignes, le tableur est inexploitable par l'utilisateur.

Les objectifs visés par la présente invention, à savoir : la représentation de manière graphique des données de programmation des filtres destinés à éviter les risques d'intrusion des réseaux informatiques interconnectés, ne sont donc pas comparables à ceux décrits dans la demande de brevet EP 0 658 837 qui portent sur une présentation par tableur des données de programmation. La solution technique selon l'invention permet d'atteindre les objectifs visés de manière simple et automatique.

Le procédé selon l'invention comporte la mise en oeuvre d'une interface graphique pour, de manière itérative :
- créer, visualiser et déplacer sur l'interface graphique les objets, les réseaux, les routeurs et les classes du domaine de sécurité,
- sélectionner et visualiser les protocoles d'application pour lesquels des filtres doivent être créés,
- dessiner sur l'interface graphique, pour chaque protocole d'application préalablement sélectionné, les lois de communication, au moyen de courbes fléchées reliant les objets et/ou les classes du domaine de sécurité de sorte que le dessin de ces courbes fléchées permet de représenter les lois de communication du domaine de sécurité.

Le dessin de ces courbes fléchées représentatives des lois de communication permet simultanément et instantanément la création des filtres associés aux routeurs filtrants et s'appliquant aux objets concernés. A cet effet et selon une étape complémentaire du procédé on convertit les données graphiques représentatives des lois de communication en données de programmation des routeurs filtrants.

Le procédé selon l'invention permet d'utiliser l'interface graphique pour visualiser la politique de sécurité du domaine de sécurité et pour la modifier le cas échéant. De préférence, on modifie les lois de communication entre objets ou classes sur l'interface graphique en sélectionnant des protocoles d'application prédéterminés.

La présente invention concerne également un système pour représenter de manière graphique les données de programmation des filtres, selon le protocole internet, destinés à éviter les risques d'intrusion des réseaux informatiques interconnectés. Le dit système consiste à utiliser une interface graphique associée à un terminal de calcul et des moyens de commande interagissant avec l'interface graphique pour :
- créer, visualiser et déplacer les objets, les réseaux, les routeurs et les classes du domaine de sécurité,
- sélectionner et visualiser les protocoles d'application pour lesquels des filtres doivent être créés,
- dessiner sur l'interface graphique, pour chaque protocole d'application préalablement sélectionné, les lois de communication , au moyen de courbes fléchées reliant les objets et/ou les classes du domaine de sécurité.

Le dessin de ces courbes fléchées représentatives des lois de communication permet simultanément et instantanément la création des filtres associés aux routeurs filtrants et s'appliquant aux objets concernés. A cet effet et selon une caractéristique complémentaire, le système comprend des moyens de calcul pour convertir les données graphiques représentatives des lois de communication en données de programmation des routeurs filtrants.

Le système selon l'invention permet d'utiliser l'interface graphique pour visualiser la politique de sécurité du domaine de sécurité et pour la modifier le cas échéant. De préférence, pour modifier les lois de communication entre objets ou classes sur l'interface graphique, les moyens de commande comportent des moyens pour sélectionner des protocoles d'application prédéterminés.

D'autres caractéristiques et avantages de l'invention apparaîtront à la lecture de la description de variantes de réalisation de l'invention, données à titre d'exemple indicatif et non limitatif, et de :
- la figure 1 présentant une vue schématique en perspective du système selon l'invention,
- la figure 2 présentant l'écran de visualisation pendant la phase de création des objets et plus particulièrement des réseaux du domaine de sécurité.
- la figure 3 présentant l'écran de visualisation pendant la phase de création des objets et plus particulièrement des routeurs du domaine de sécurité.
- la figure 4 présentant l'écran de visualisation après que les liens entre les objets aient été spécifiés (dans le cas représenté le routeur est interconnecté par des liens physiques à cinq réseaux).
- les figures 5 et 6 présentant l'écran de visualisation pendant la phase de création des classes du domaine de sécurité ;
- la figure 7 présentant l'écran de visualisation pendant la phase de sélection des protocoles d'application et de dessin des lois de communication.

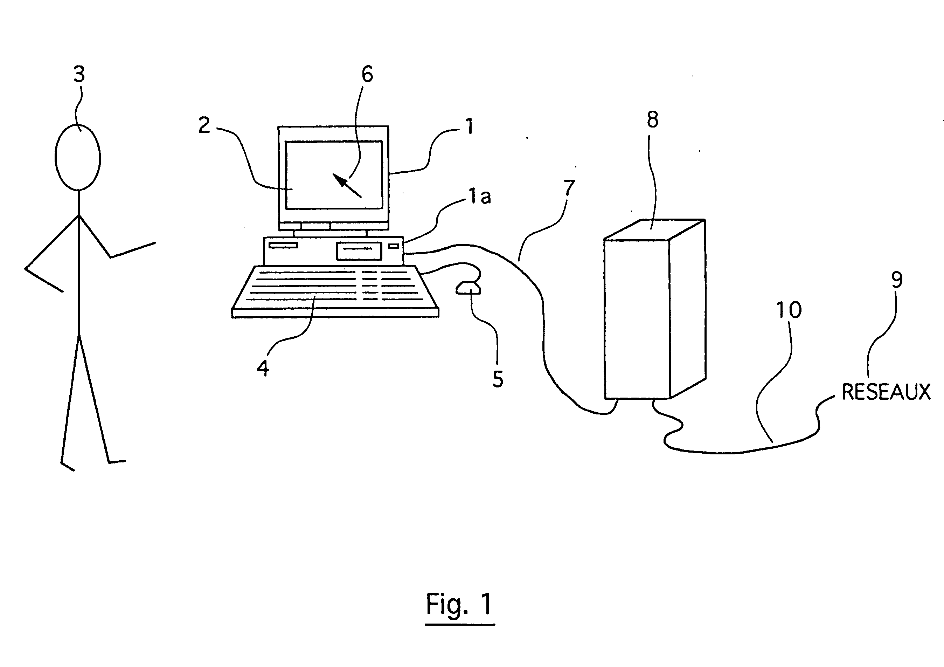

On va maintenant décrire la figure 1 qui représente une vue schématique en perspective du système selon l'invention.

Le terminal de calcul 1 comporte un écran de visualisation 2 autrement appelé interface graphique. Le terminal est commandé par l'utilisateur 3 au moyen d'un clavier 4 et d'un boîtier de commande 5 (une souris). Ces organes de commande permettent, de manière usuelle, de déplacer un pointeur 6 sur l'écran de visualisation 2. Le terminal de calcul est interconnecté par une liaison câble 7 à au moins un routeur filtrant programmable 8. Ce routeur est lui même interconnecté aux réseaux 9 par des liens 10 .

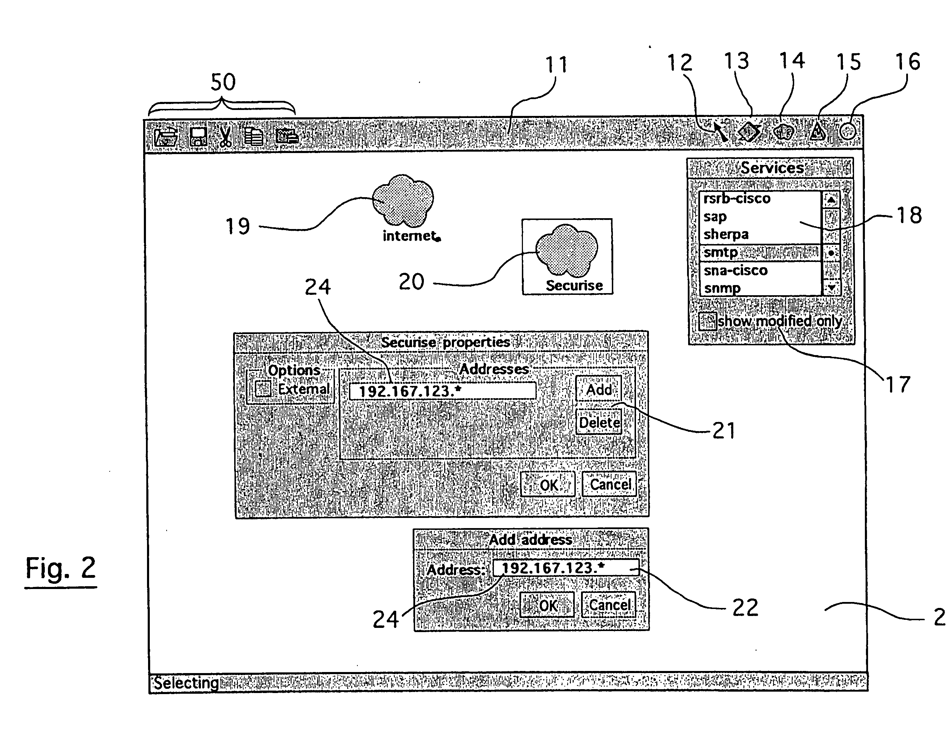

On va maintenant décrire la figure 2 qui représente l'écran de visualisation pendant la phase de création des objets et plus particulièrement des réseaux du domaine de sécurité.

La partie droite de la barre d'outil 11 de l'écran de visualisation 2 comporte cinq icônes : 12 sélection, 13 routeur filtrant, 14 réseau, 15 classe, 16 loi de communication, dont on décrira ci-après les fonctions. A gauche de la barre d'outil 11 se trouve les icônes 50 : fichier, édition, couper, coller. De manière usuelle, ces outils permettent, lorsqu'ils sont sélectionnés et activés par le pointeur 6 actionné par le boîtier de commande 5, d'ouvrir des fichiers, d'enregistrer l'interface graphique, d'en couper ou d'en coller des parties.

Une fenêtre ouverte 17 comporte la liste des services 18 autrement appelés protocoles d'application dans la description.

Afin de créer la représentation graphique d'un réseau sur l'interface graphique 2, l'utilisateur utilise la souris 5 pour activer au moyen du pointeur 6 l'icône 14. Les représentations graphiques des réseaux apparaissent sur l'écran de visualisation 2, sous forme de nuages, 19, 20, etc. Au moyen de l'outil de sélection 12, l'utilisateur peut sélectionner, déplacer et disposer à sa convenance les réseaux. Dans l'exemple représenté, le réseau 20 dénommé "sécurisé" a été sélectionné. En agissant sur le boîtier de commande 5 l'utilisateur peut ouvrir des fenêtres de dialogue 21, 22 sur l'écran 2 afin d'entrer les propriétés du réseau, notamment les adresses 24. L'utilisateur procède de manière itérative pour créer les autres réseaux.

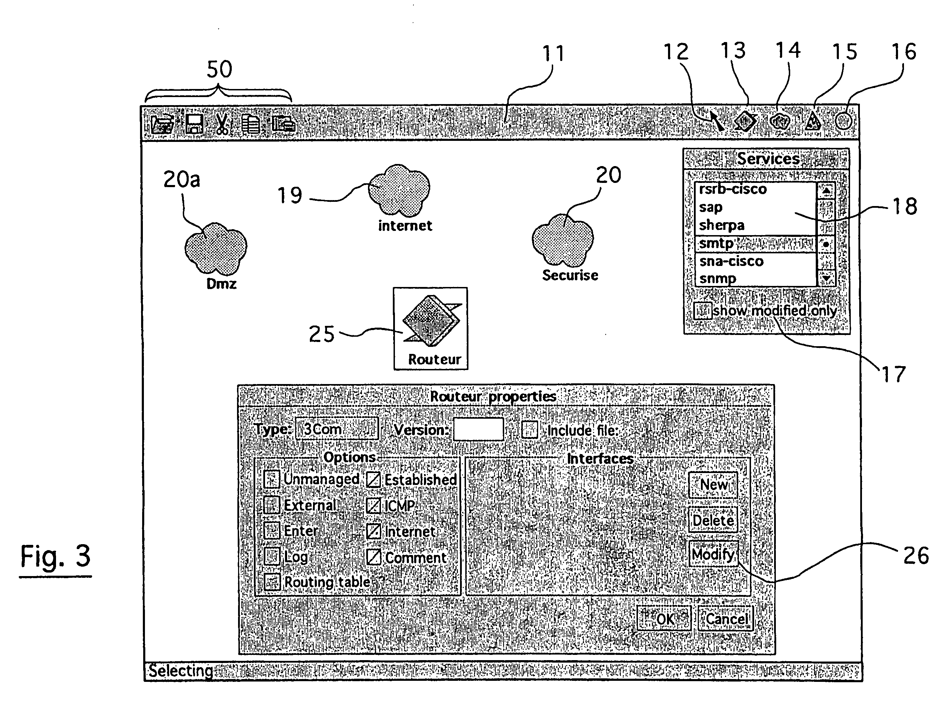

On va maintenant décrire la figure 3 qui représente l'écran de visualisation pendant la phase de création des objets et plus particulièrement des routeurs du domaine de sécurité.

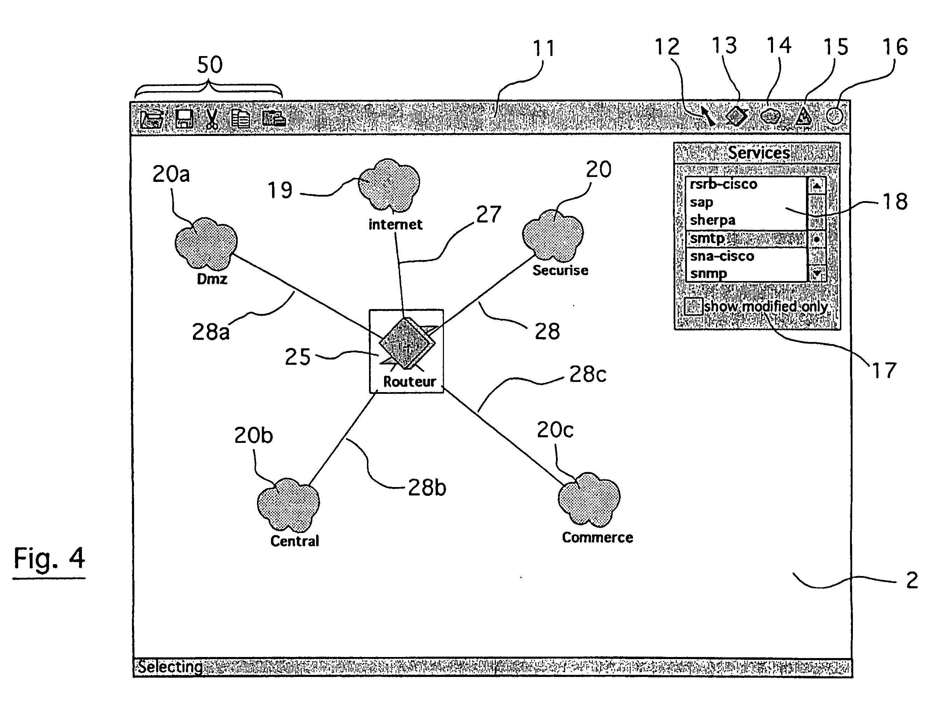

Afin de créer la représentation graphique d'un routeur 25 sur l'interface graphique 2, l'utilisateur utilise la souris 5 pour activer au moyen du pointeur 6 l'icône 13. La représentation graphique du routeur 25 apparaît sur l'écran de visualisation 2. Au moyen de l'outil de sélection 12, l'utilisateur peut sélectionner, déplacer et disposer à sa convenance le routeur 25 sur l'interface graphique 2. Dans l'exemple représenté, le routeur 25 dénommé "routeur" a été sélectionné. En agissant sur le boîtier de commande 5 l'utilisateur peut ouvrir des fenêtres de dialogue 26 sur l'écran 2 afin d'entrer les propriétés du routeur notamment ses spécifications (la marque du constructeur et du logiciel associé) ainsi que les spécifications (les noms) des réseaux avec lesquels le routeur est interfacé. Les liens ou les connexions entre les réseaux 19 "Internet", 20 "Sécurisé", 20a "Dmz", 20b "Central", 20c "Commerce", et le routeur 25 sont représentés sur l'interface graphique 2 par des traits 27, 28, 28a, 28b, 28c (figure 4). L'utilisateur procède de manière itérative pour créer les autres routeurs et spécifier leurs liens avec les réseaux.

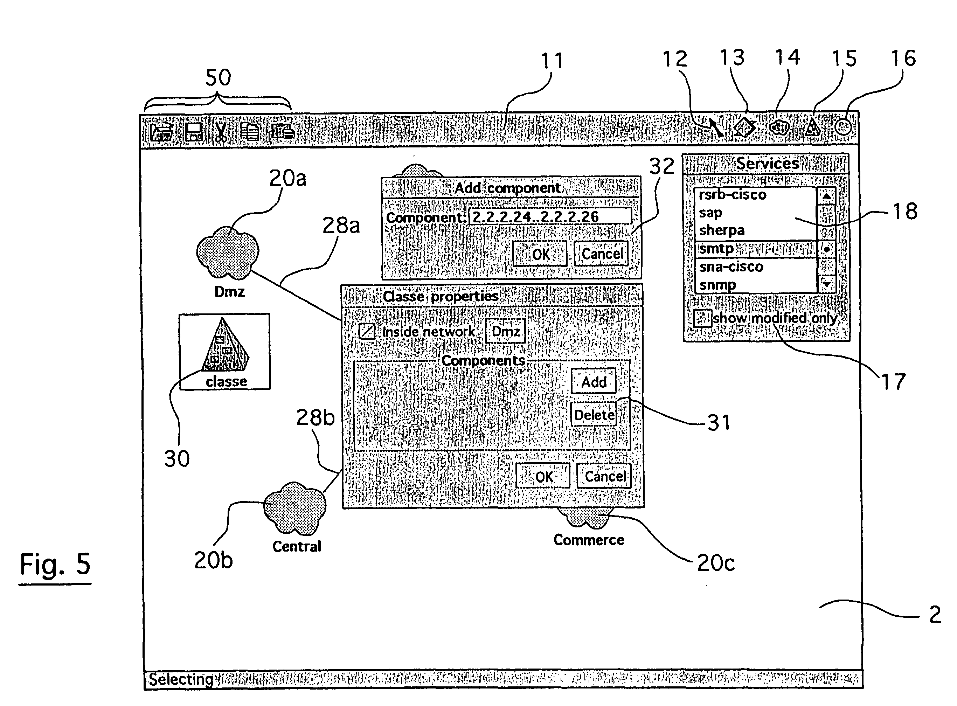

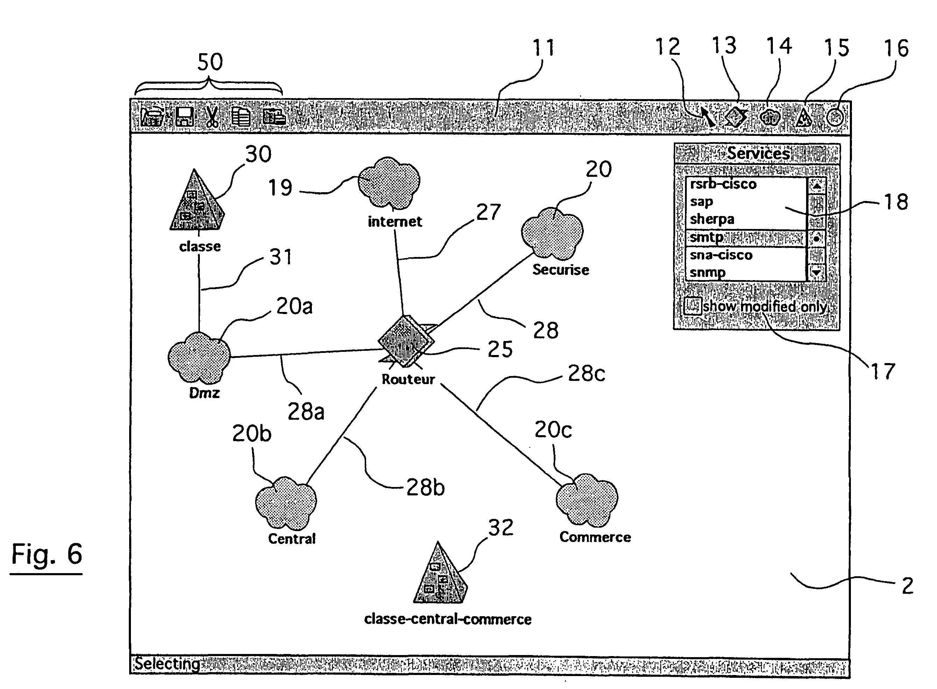

On va maintenant décrire les figures 5 et 6 qui représentent l'écran de visualisation pendant la phase de création des classes du domaine de sécurité.

Afin de créer la représentation graphique d'une classe 30 sur l'interface graphique 2, l'utilisateur utilise la souris 5 pour activer au moyen du pointeur 6 l'icône 13. La représentation graphique de la classe 25 apparaît sur l'écran de visualisation 2. Au moyen de l'outil de sélection 12, l'utilisateur peut sélectionner, déplacer et disposer à sa convenance la classe 30 sur l'interface graphique 2. Dans l'exemple représenté la classe 30 dénommée "classe" a été sélectionnée. En agissant sur le boîtier de commande 5 l'utilisateur peut ouvrir des fenêtres de dialogue 31, 32 sur l'écran 2 afin d'entrer les propriétés de la classe notamment les adresses du réseau "Dmz" 20 appartenant à la classe 30 "classe". Un trait de couleur gris pale 31 permet de visualiser l'appartenance de la classe 20a au réseau "Dmz" 20a (figure 6). La classe 32 dénommée "classe-central-commerce" a été spécifiée de telle sorte qu'elle inclut des adresses du réseau 20b "Central" et des adresses du réseau 20c "Commerce". Aucun trait ne relie la classe 32 "classe-central-commerce" aux réseaux 20b "Central" et 20c "Commerce". On visualise ainsi sur l'interface graphique 2 que la classe 32 "classe-central-commerce" regroupe des objets présents dans les réseaux "Central" et "Commerce". L'écran 2 de la figure 6 représente, dans le cas particulier décrit, le domaine de sécurité ainsi que les objets (réseaux, routeur) et les classes de ce domaine de sécurité. L'utilisateur procède de manière itérative pour créer les autres classes et compléter le domaine de sécurité.

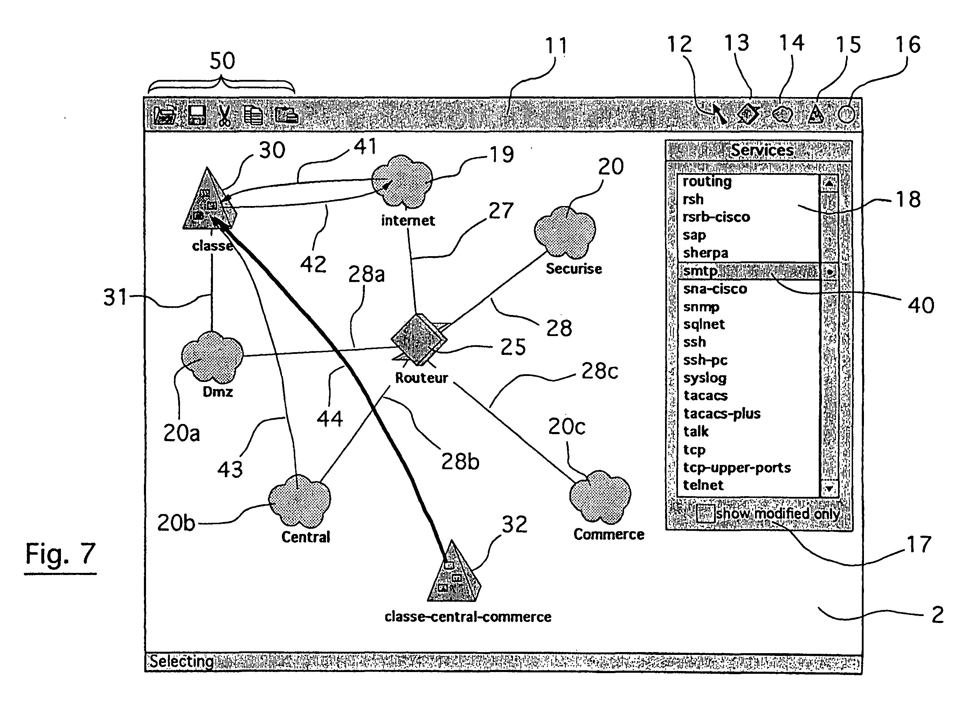

On va maintenant décrire la figure 7 qui présente l'écran de visualisation pendant la phase de sélection des protocoles d'application et de dessin des lois de communication.

L'utilisateur actionne le boîtier de commande 5 pour déplacer le pointeur 6 et sélectionner puis activer dans la fenêtre services (protocoles d'application) 18, le protocole d'application concerné. La liste des protocoles d'application apparaissant dans la fenêtre services 18 est proposée par défaut, l'utilisateur a la possibilité d'en ajouter d'autres. Dans le cas décrit le protocole d'application sélectionné est le protocole 40 "smtp". Par défaut, la" loi de communication ", c'est-à-dire la loi autorisant ou interdisant pour le protocole d'application concerné, la communication entre un couple d'objets, un couple de classes ou un couple mixte (classe, objet) est une loi d'interdiction. Pour définir la politique de sécurité associée au protocole d'application 40 "smtp" sélectionné, l'utilisateur procède comme il sera ci-après décrit en se référant à deux cas particuliers.

Dans le premier cas, pour mettre en place une loi d'autorisation du réseau "Internet" 19 vers la classe "classe" 30, l'utilisateur utilise la souris 5 pour activer au moyen du pointeur 6 l'icône 16. Il spécifie alors au moyen d'une fenêtre de dialogue qu'il s'agit d'une loi d'autorisation. Ensuite l'utilisateur positionne le pointeur 6 sur le réseau "Internet" 19, actionne le boîtier de commande 5 pour sélectionner le réseau "Internet" 19, déplace le pointeur 6 du réseau "Internet " 19 vers la classe "classe" 30 et la sélectionne. Une ligne fléchée 41 colorée en vert est ainsi dessinée sur l'interface graphique 2, la pointe de la flèche étant orientée vers la classe "classe" 30. L'utilisateur procède de la même façon pour mettre en place une loi d'autorisation de la classe "classe" 30 vers le réseau "Internet" 19. Il dessine ainsi une autre ligne fléchée 42 colorée en vert, la pointe de la flèche étant orientée vers le réseau "Internet" 19. L'utilisateur a ainsi visualisé sur l'interface graphique que les équipements informatiques appartenant à la classe 30 "classe" du sous-ensemble du réseau 20a "Dmz", peuvent communiquer dans les deux sens avec les objets du réseau "Internet" 19.

Dans le deuxième cas, pour mettre en place une loi d'autorisation du réseau "Central" 20b vers la classe 30 "classe" et une loi d'interdiction de la classe 32 "classe-central-commerce" vers la classe 30 "classe", l'utilisateur procède comme précédemment, en spécifiant au moyen de la fenêtre de dialogue la loi d'autorisation et celle d'interdiction. Il dessine ainsi deux lignes fléchées, l'une 43 colorée en vert, l'autre 44 colorée en rouge. L'utilisateur a ainsi visualisé sur l'interface graphique que les équipements informatiques du réseau 20b "Central" peuvent communiquer avec le sous-ensemble des équipements informatiques du réseau 20a "Dmz", appartenant à la classe 30 "classe" mais que par contre les équipements informatiques des réseaux 20b "Central" et 20c "Commerce" appartenant à la classe 32 "classe-centra-commerce" ne peuvent pas communiquer avec le sous-ensemble des équipements informatiques du réseau 20a "Dmz", appartenant à la classe 30 "classe". Lorsqu'il y a conflit de loi, c'est la loi d'interdiction qui l'emporte sur la loi d'autorisation.

L'utilisation de courbes fléchées est un moyen graphique connu pour représenter une relation entre des objets. Le document IEEE TRANSACTIONS ON SOFTWARE ENGINEERING, vol. 16, no. 10, XP000162478, décrit une telle technique dans le cas de l'accès sécurisé à des dossiers informatiques.

L'utilisateur procède de manière itérative pour sélectionner les autres protocoles d'application et dessiner les lois de communication qui leur sont associés.

Le dessin de ces courbes fléchées représentatives des lois de communication permet de créer simultanément et instantanément la création des filtres associés aux routeurs filtrants et s'appliquant aux objets concernés. A cet effet, le terminal de calcul 1 comprend des moyens de calcul la pour convertir les données graphiques correspondant aux lois de communication en données de programmation des routeurs filtrants 8. Les données de programmation sont transférées du terminal de calcul 1, par la liaison 7, vers le routeur filtrant 8 dont les paramètres de filtrage sont ainsi automatiquement et rapidement réglés.

## Revendications

1. Procédé pour représenter de manière graphique les données de programmation des filtres, selon le protocole internet, destinés à éviter les risques d'intrusion des réseaux informatiques interconnectés ; ledit procédé étant **caractérisé par** la mise en oeuvre d'une interface graphique (2) pour, de manière itérative :
- créer (13, 14, 15), visualiser (2) et déplacer (5, 6, 12) sur l'interface graphique les objets (19, 20, 25, 30, 32), les réseaux (19, 20), les routeurs (25) et les classes (30, 32) du domaine de sécurité,
- sélectionner (12) et visualiser (18) les protocoles d'application (40) pour lesquels des filtres doivent être créés,
- dessiner (16) sur l'interface graphique (2), pour chaque protocole d'application (40) préalablement sélectionné, les lois de communication, au moyen de courbes fléchées (41, 42, 43, 44) reliant les objets et/ou les classes du domaine de sécurité,
de sorte que le dessin de ces courbes fléchées permet de représenter les lois de communication du domaine de sécurité.

2. Procédé selon la revendication 1 tel que pour créer les filtres associés aux routeurs filtrants (25) et s'appliquant aux objets (20) concernés,
- on convertit les données graphiques représentatives des lois de communication en données de programmation des routeurs filtrants (8, 25).

3. Procédé selon l'une des revendications 1 ou 2 tel que pour modifier la politique de sécurité du domaine de sécurité,
- on modifie les lois de communication (41, 42, 43, 44) entre les objets (20) ou les classes (30) sur l'interface graphique (2), en sélectionnant des protocoles d'application prédéterminés.

4. Système pour représenter de manière graphique les données de programmation des filtres, selon le protocole internet, destinés à éviter les risques d'intrusion des réseaux informatiques interconnectés ; ledit système étant **caractérisé par** une interface graphique (2) associée à un terminal de calcul (1) et des moyens de commande (4, 5) interagissant de manière itérative avec l'interface graphique (2) pour :
- créer (13,14,15), visualiser (2) et déplacer (5, 6, 12) sur l'interface graphique (2) les objets, les réseaux (19, 20), les routeurs (20, 25) et les classes (30) du domaine de sécurité,
- sélectionner (12) et visualiser (18) les protocoles d'application (40) pour lesquels des filtres doivent être créés
- dessiner (16) sur l'interface graphique (2), pour chaque protocole d'application (40) préalablement sélectionné, les lois de communication , au moyen de courbes fléchées (41, 42, 43, 44) reliant les objets et/ou les classes du domaine de sécurité,
de sorte que le dessin de ces courbes fléchées permet de représenter les lois de communication du domaine de sécurité.

5. Système selon la revendication 4 tel que pour créer les filtres associés aux routeurs filtrants (25) et s'appliquant aux objets concernés, le système comprend des moyens de calcul (1a) pour :
- convertir les données graphiques représentatives des lois de communication en données de programmation des routeurs filtrants (8, 25).

6. Système selon les revendications 4 ou 5 tel que pour modifier la politique de sécurité du domaine de sécurité, les moyens de commande (4, 5) comportent des moyens pour sélectionner des protocoles d'application prédéterminés.

## Patentansprüche

1. Verfahren zur graphischen Darstellung der Programmierungsdaten von Filtern nach dem Internet-Protokoll, zum Abstellen der Gefahren des Eindringens in untereinander verbundene Datennetzwerke, wobei das Verfahren **gekennzeichnet ist durch** den Einsatz einer graphischen Schnittstelle (2), um in iterativer Weise:
- die Gegenstände (19, 20, 25,30, 32), die Netzwerke (19, 20), die Router (25) und die Klassen (30, 32) des Sicherheitsbereiches auf der graphischen Schnittstelle zu erzeugen (13, 14, 15), anzuzeigen (2) und zu bewegen (5, 6, 12),
- die Anwendungsprotokolle (40), für welche die Filter erzeugt werden müssen, zu wählen (12) und anzuzeigen (18),
- für jedes vorab gewählte Anwendungsprotokoll (40) die Kommunikationsgesetze mit Hilfe von mit Pfeilen behafteten Kurven (41. 42, 43, 44), welche die Gegenstände und/oder die Klassen des Sicherheitsbereiches verbinden, auf der graphischen Schnittstelle (2) zu zeichnen (16).
so dass die Zeichnung dieser mit Pfeilen behafteten Kurven die Darstellung der Kommunikationsgesetze des Sicherheitsbereiches ermöglicht.

2. Verfahren nach Anspruch 1, von der Art, dass zum Erzeugen der mit den filternden Routern (25) assoziierten und auf die betroffenen Gegenstände (20) anwendbaren Filtern:
- Konvertieren der für die Kommunikationsgesetze repräsentativen graphischen Daten in Programmierungsdaten der filternden Router (8, 25).

3. Verfahren nach einem der Ansprüche 1 oder 2, derart, dass zum Ändern der Sicherheitspolitik des Sicherheitsbereiches:
- die Kommunikationsgesetze (41, 42, 43, 44) zwischen den Gegenständen (20) oder den Klassen (30) auf der graphischen Schnittstelle (2) geändert werden, wobei vorgegebene Anwendungsprotokolle gewählt werden.

4. System zum graphischen Darstellen der Filterprogrammierungsdaten nach dem Internet-Protokoll, zum Abstellen der Gefahren des Eindringens in untereinander verbundene Datennetzwerke, wobei das System **gekennzeichnet ist durch** eine mit einem Berechnungsterminal (1) assoziierte graphische Schnittstelle (2) sowie **durch** Steuermittel (4, 5), die in iterativer Wechselwirkung mit der graphischen Schnittstelle (2) stehen, um:
- die Gegenstände, die Netzwerke (19, 20), die Router (20, 25) und die Klassen (30) des Sicherheitsbereiches auf der graphischen Schnittstelle (2) zu erzeugen (13. 14, 15), anzuzeigen (2) und zu bewegen (5, 6, 12),
- die Anwendungsprotokolle (40), für welche die Filter erzeugt werden müssen, zu wählen (12) und anzuzeigen (18),
- für jedes vorab gewählte Anwendungsprotokoll (40) die Kommunikationsgesetze mit Hilfe von mit Pfeilen behafteten Kurven (41, 42, 43, 44), welche die Gegenstände und/oder die Klassen des Sicherheitsbereiches verbinden, auf der graphischen Schnittstelle (2) zu zeichnen (16),
so dass die Zeichnung dieser mit Pfeilen behafteten Kurven die Darstellung der Kommunikationsgesetze des Sicherheitsbereiches ermöglicht.

5. System nach Anspruch 4, derart, dass zum Erzeugen der mit den filternden Routern (25) assoziierten und auf die betroffenen Gegenstände anwendbaren Filtern, das System Berechnungsmittel (1a) aufweist, um:
- die für die Kommunikationsgesetze repräsentativen graphischen Daten in Programmierungsdaten der filternden Routern (8, 25) zu konvertieren.

6. Systeme nach einem der Ansprüche 4 oder 5, derart dass, um die Sicherheitspolitik des Sicherheitsbereiches zu ändern, die Steuermittel (4, 5) über Mittel verfügen, um vorbestimmte Anwendungsprotokolle zu wählen.

## Claims

1. A method of graphically representing filter programming data, according to the internet protocol, intended to avoid the risks of intrusion of interconnected computer networks; said method being **characterized by** the implementation of a graphical interface (2) for, iteratively:
- creating (13, 14, 15), viewing (2), and moving (5, 6, 12), at the graphical interface, the objects (19, 20, 25, 30, 32), networks (19, 20), routers (25) and classes (30, 32) of the security domain,
- selecting (12) and viewing (18) the application protocols (40) for which filters are to be created,
- drawing (16), at the graphical interface (2), for each previously selected application protocol (40), the laws of communication, by means of arrow curves (41, 42, 43, 44) linking the objects and/or classes of the security domain, so that the drawing of such arrow curves allows to represent the laws of communication of the security domain.

2. The method according to claim 1, so that in order to create the filters associated with the filtering routers (25) and applicable to the objects (20) involved,
- the graphical data representing the laws of communication are converted into programming data of the filtering routers (8, 25).

3. The method according to any of claims 1 or 2, so that in order to modify the security policy of the security domain,
- the laws of communication (41, 42, 43, 44) between objects (20) or classes (30) are modified at the graphical interface (2), by selecting predetermined application protocols.

4. A system for graphically representing filter programming data, according to the internet protocol, intended to avoid the risks of intrusion of interconnected computer networks; said system being **characterised by** a graphical interface (2) associated with a computing terminal (1) and control means (4, 5) interacting iteratively with the graphical interface (2) for:
- creating (13, 14, 15), viewing (2), and moving (5, 6, 12), at the graphical interface (2), the objects, networks (19, 20), routers (20, 25), and classes (30) of the security domain,
- selecting (12) and viewing (18) the application protocols (40) for which filters are to be created,
- drawing (16), at the graphical interface (2), for each previously selected application protocol (40), the laws of communication, by means of arrow curves (41, 42, 43, 44) linking the objects and/or classes of the security domain, so that the drawing of such arrow curves allows to represent the laws of communication of the security domain.

5. The system according to claim 4, so that in order to create the filters associated with the filtering routers (25) and applicable to the objects involved, the system comprises a computation means (1a) for:
- converting the graphical data representing the laws of communication into programming data of the filtering routers (8, 25).

6. The system according to claims 4 or 5, so that in order to modify the security policy of the security domain, the control means (4, 5) comprises a means for selecting predetermined application protocols.
